# EUROPÄISCHE PATENTSCHRIFT

(11) **EP 2 922 885 B1**
(45) Veröffentlichungstag und Bekanntmachung des Hinweises auf die Patenterteilung: **18.10.2017**
(21) Anmeldenummer: 13795506.8
(22) Anmeldetag: 26.11.2013
(51) Int. Cl.: C08G 8/00, B22C 1/22, B32B 27/42, C07G 1/00, C09J 161/00, C09J 197/00, C08L 97/00

(54) **VERFAHREN ZUR HERSTELLUNG VON PHENOL-FORMALDEHYD-HARZ-ANALOGEN POLYMEREN**
METHOD FOR PRODUCING PHENOL FORMALDEHYDE RESIN-BASED POLYMERS
PROCÉDÉ DE PRÉPARATION DE POLYMÈRES ANALOGUES AUX RÉSINES PHÉNOL-FORMALDÉHYDE

(30) Priorität: 26.11.2012 AT 505432012
(43) Veröffentlichungstag der Anmeldung: 30.09.2015
(73) Patentinhaber: Annikki GmbH, 8020 Graz (AT)
(72) Erfinder: WIRTZ, Dörthe Hendrike, 51061 Köln (DE); KOCH, Monika, A-8010 Graz (AT); DYBOV, Alexander, 8073 Feldkirchen bei Graz (AT); STAUNIG, Nicole, A-8076 Vasoldsberg (AT)
(74) Vertreter: Nemec, Harald
(86) Internationale Anmeldenummer: PCT/EP2013/074720
(87) Internationale Veröffentlichungsnummer: WO 2014/080033

(56) Entgegenhaltungen:
- EP-A1- 0 540 837
- DE-B- 1 000 150
- US-A- 2 201 797
- US-A- 3 697 498
- US-A- 3 886 101
- US-A- 4 769 434
- US-A- 5 010 156
- US-A1- 2002 065 400

## Beschreibung

Die vorliegende Erfindung betrifft ein Verfahren zur Herstellung von Phenol-Formaldehyd-Harz-analogen Polymeren auf Ligninbasis.

Lignin, das zur erfindungsgemäßen Herstellung von Phenolharzanaloga verwendet werden kann, kann aus Lignocellulosematerialien extrahiert werden. Bei klassischen Holzaufschlüssen zur Zellstoffherstellung werden im allgemeinen unselektive Aufschlussverfahren verwendet, bei denen Lignin und Xylan gleichzeitig bei hohen Temperaturen in Gegenwart von schwefelhaltigen Reagenzien aus dem Lignocellulosematerial entfernt werden. Das entfernte Lignin wird dabei durch RingKondensation und Angriff der schwefelhaltigen Reagenzien stark in seiner Struktur verändert und kann in der Regel nur als Brennstoff genutzt werden. Darüber hinaus kann es durch Hochtemperatur-Verfahren zur Entstehung von heterozyklischen Substanzen (z.B. Furfural) aus Zuckern kommen, was aufwendige Recyclingverfahren und Reinigungsverfahren notwendig macht.

In der Literatur sind verschiedene Verfahren zur Lignin-Isolierung/Entfernung aus Zellstoff bekannt. Es werden im Folgenden diejenigen Verfahren beschrieben, die eine industrielle Anwendung gefunden haben, nämlich *"Soda pulping processes"* (Soda Prozess), *"Kraft pulping processes"* (Kraft Prozess), und *"Sulfite pulping processes"* (Sulfit Prozess). Viele Beispiele und detaillierte Beschreibungen der Techniken kann man dem "Handbook for Pulp & Paper Technologies", 2nd Edition, G. A. Smook, Angus Wilde Publications (1992)" entnehmen. Hier wird der Stand der Technik anhand von Veröffentlichungen beschrieben, die jeweils die aktuellsten Verbesserungen und Modifikationen der besagten Prozesse darstellen.

Der Soda-Prozess wurde 1851 von Burgess und Watts entwickelt und verzichtet auf die Verwendung von umweltgefährdenden Schwefelverbindungen. Als Aufschlusschemikalie dient einzig NaOH, weshalb der Prozess für eine ausreichende Delignifizierung bei hohen Temperaturen durchgeführt werden muss. Im Vergleich zu anderen Prozessen findet ein hoher Abbau von Kohlenhydraten statt, sodass ein geringerer Polymerisationsgrad und eine geringere Reißfestigkeit bei der Cellulose erhalten wird.

Zudem ist das Verfahren nur für leicht bleichbare Materialien geeignet. In einigen Fällen wird Anthrachinon zum Stabilisieren der Kohlenhydrate zugegeben (Soda-Anthrachinon-Verfahren). Der Soda-Prozess bietet gegenüber dem Kraft-Prozess eine Möglichkeit, Lignin ohne, oder mit sehr geringem Schwefelgehalt zu erhalten. Um denselben Delignifizierungseffekt wie beim Kraft-Prozess zu erhalten, muss aber die Lignin-Entfernung bei noch höheren Temperaturen als im Kraft-Prozess durchgeführt werden, wodurch stärker kondensiertes Lignin erhalten wird. Zusätzlich entstehen beim Erhitzen von Kohlenhydraten bei Soda-Prozess-Temperaturen heterocyclische Substanzen wie Furfural, die aufwendig abgetrennt werden müssen.

Der Sulfit-Prozess wurde erstmals von Benjamin Tilghman im Jahre 1867 patentiert. Das erste industrielle Verfahren, das diesen Prozess nutzte, startete 1874 in Schweden. Bei diesem Verfahren werden meist Mischungen verschiedener Salze der schwefeligen Säure als aktive Reagenzien zugegeben. Am weitesten verbreitet sind die Calcium- und Magnesiumsalze. Durch die Wahl der Gegenionen kann der Prozess vom stark sauren bis zum basischen Milieu betrieben werden. Auch eine zweistufige Kombination aus beidem hat sich in einigen Fällen als nützlich erwiesen. Klassische Verfahren arbeiten im stark sauren (Calcium, pH=1-2) oder schwach sauren Bereich (Magnesium, pH=3-4). Durch das Sulfit wird dabei das Lignin chemisch modifiziert und besser wasserlöslich gemacht. Aufgrund seiner Umweltschädlichkeit besitzt der Sulfit-Prozess heute eine untergeordnete Bedeutung. Obwohl diese Sulfit-Prozesse sowohl die Molekularmasse von Cellulose weitgehend erhalten, als auch eine Degradierung von Lignin vermeiden, haben sie den großen Nachteil, dass das gewonnene Lignin einen Schwefelanteil von ca. 5% enthalten kann (S. Brudin, P. Schoenmaker, J. Sep. Sci. 2010, 33, 439-452), was dessen mögliche Anwendungen sehr einschränkt. Zudem ist das erhaltene Lignin wasserlöslich, wodurch es zwar gute Eigenschaften als Emulgator aufweist, jedoch schwieriger zu isolieren ist.

Der Kraft Prozess wurde 1884 von Carl Ferdinand Dahl in Danzig entwickelt (siehe z.B. US 296,935) und beinhaltet ein Verfahren, bei dem Lignin mittels einer Mischung aus Na₂SO₄, Na₂CO₃, NaOH und NaS unter Überdruck von 5-14 Atmosphären aus dem Zellstoff herausgelöst wird. Das Lignin wird dabei als lösliches Alkalilignin in der Schwarzlauge erhalten und besitzt einen hohen Schwefelanteil. Lignin nach Kraft-Prozess enthält zwischen 1,5 und 3,0 % Schwefel (Marton J. "Lignins; Occurrence, formation, structure and reactions", 1971, Wiley-Interscience, Eds. Sarkanen K.V. and Ludwig C.H., USA, p 666). Es wird in den meisten Fällen als Energiequelle zur Erzeugung des Wärmebedarfs für den Prozess verbrannt findet aber auch Anwendung als Füllstoff in Phenolformaldehyd-Harzen. Das Kraft-Verfahren stellt aktuell das häufigste Verfahren zur Produktion von Papierzellstoff dar. Ein Vorteil des Kraft-Prozesses ist die relativ einfache Möglichkeit zur Herstellung von delignifizierter, leicht weiter bleichbarer Cellulose. Ein großer Nachteil davon ist, dass das hochwertige Lignin für die weitere Anwendung nur beschränkt tauglich ist, da es nach Abtrennung von den anderen Rohstoffkomponenten durch Hochtemperatur-Kondensationsreaktionen stark in seiner Struktur verändert ist. Darüber hinaus wird das Lignin durch die Reaktion mit Sulfid stark mit Schwefel modifiziert.

Als relativ neue Konzepte zur Gewinnung von Lignin sind in der letzten Zeit Organosolv Prozesse wieder aufgegriffen worden. Diese wurden erstmals in den 1970er Jahren beschrieben. Damals wurden Strategien zu einem *"extended cooking"* entwickelt, das im Wesentlichen darauf beruhte, den "Delignifizierungsgrad" zu erhöhen und den Bleichaufwand zu senken. Als Lösungsmittel werden vorwiegend Alkohole wie Ethanol oder Methanol verwendet, die hauptsächlich die Löslichkeit des Lignins erhöhen sollen, während als eigentliche Aufschlusschemikalien weiterhin Säuren, Alkali, Sulfit oder Sulfid oder oxidative Reagenzien fungieren (H. Hergert, 1998, Developments in organosolv pulping; In: R.A. Young and M. Akhtar, Environmentally friendly technologies for the pulp and paper industry; John Wiley & Sons Inc., New York, 5-68).

Grundlegend lassen sich Organosolv-Prozesse in saure und basische Varianten unterteilen. Ein saurer Prozess ist z.B. der Allcell Prozess, der von der Firma LIGNOL übernommen und weiter entwickelt wurde (C. Arato, E.K. Pye, G. Gjennestad, 2005, The Lignol approach to biorefining of woody biomass to produce ethanol and chemicals; Appl. Biochem. Biotechnol., Vol. 121-124, p.871-882). Als Substrate werden Holz, Stroh oder Bagasse verarbeitet. Die zugrundeliegende chemische Reaktion ist die autohydrolytische Spaltung von Hemicelluose bei einem pH-Wert von 2,0-3,8, der sich durch die vom Xylan abgespaltene Essigsäure ergibt (Bedingungen: 180-195 °C, Ethanolkonzentration: 35-70 Gew.-%, Flüssigkeit zu Feststoff Verhältnis: von 4:1 bis 10:1, Reaktionszeit 30-90 Minuten). Dadurch wird zum Teil Cellulose in Form von unlöslichen Oligosacchariden und ein großer Teil der Hemicellulose zu löslichen Oligo- und Monosacchariden abgespalten. Ein Teil der Pentosen wird unter den Reaktionsbedingungen zu Furfural oxidiert. Lignin wird ebenfalls teilweise hydrolysiert und fällt gemeinsam mit den anderen Abbauprodukten in der Kochlauge an, aus der die Abbauprodukte dann gewonnen werden. Der andere, nicht hydrolysierte Teil verbleibt im Feststoff und kann zum Beispiel enzymatisch zu Zuckern hydrolysiert und zu Ethanol vergoren werden. Das im Feststoff verbliebene Lignin (20-25% des ursprünglichen) fällt als Fermentationsrückstand an und kann nur noch verbrannt werden.

Es kann gesagt werden, dass bei sauren Organosolv Prozessen einerseits die gewonnene Lignin-Menge relativ niedrig ist und der Ligninabbau nicht vom Hemicellulose Abbau entkoppelt werden kann. Auf Grund des relativ schlechten Ligninabbaus entsteht ein Faserstoff mit einem Restligningehalt, der im Falle einer Verwendung als Chemierohstoff einen erheblichen Bleichaufwand erfordern würde und für diese Verwendung ungeeignet ist. Es wird daher primär die Verwendung als Rohstoff für die Bioalkoholgewinnung angestrebt, wenngleich es Berichte gibt, die belegen, dass die Zugänglichkeit des Restlignins im Zellstoff relativ hoch ist (E.K. Pye, J. H. Lora, 1991, The Allcell Process - A Proven Alternative to Kraft Pulping, TAPPI Journal March 1991, 113-117).

Basische Organosolv-Prozesse wurden in der Vergangenheit wesentlich weniger untersucht als saure, da bei hohem Natronlauge-Einsatz, im Speziellen bei Verwendung von Stroh als Substrat, hohe technische Anforderungen an die Natronlauge Rückgewinnung gestellt werden (WO8201568).

In Deutschland wurde in den 90er Jahren der Organocell-Prozess zur Zellstoffkochung bis zur industriellen Anwendung entwickelt (N. Zier, 1996, Strukturelle Merkmale eines Organosolv-Lignins bei Variation der Parameter; Dissertation, Technische Universität Dresden). Der Prozess läuft 2-stufig ab, beginnend mit einer Alkohol-Wasser-Imprägnierung (Verhältnis: 3:7) bei 110-140 °C und anschließender Kochung bei 165-170 °C unter Zusatz von 30 % Natronlauge und 0,1 % Anthrachinon, bezogen auf das Trockengewicht des Substrats. Der Prozess ist für den Aufschluss von Laub- und Nadelholz, sowie auch für Einjahrespflanzen geeignet. Die Zellstoffqualität ist mit der von Kraft-Zellstoff vergleichbar und konnte mit Sauerstoff chlorfrei gebleicht werden. Verschiedenen Angaben zufolge wurde die Anlage bald nach Inbetriebnahme auf Grund technischer Probleme wieder geschlossen, die zum Teil mit der Rückgewinnung der hohen Menge an Natronlauge zusammenhingen (El-Sakhawy et al., 1996: Organosolv pulping, (3), ethanol pulping of wheat straw; Cellul. Chem. Technol. 30, 281-296).

Für einen rentablen Bioraffinerie-Prozess, der nicht auf die Gewinnung von Bioalkohol, sondern die Nutzung aller Hauptkomponenten der Lignocellulose als Chemie- oder Materialrohstoff abzielt, ist die Gewinnung eines möglichst hohen Anteils des vorhandenen Lignins erforderlich. Dies sollte in einem einheitlichen Produktstrom mit geringen Verunreinigungen durch Abbauprodukte aus anderen Komponenten erfolgen.

Aus WO 2011/014894 und WO 2012/027767 sind Niedertemperaturverfahren zur Trennung des besagten Lignins von lignocellulosischem Material wie Stroh, Bagasse, Energiegräser und oder Spelzen bekannt. Der Aufschlussprozess sieht einen Niedertemperaturprozess zur Delignifizierung bei unter 100°C vor, wonach das entstandene, mit Cellulose und Hemicellulose angereicherte Material mit mindestens einem Kohlenhydratspaltenden Enzym behandelt werden kann. Eine Variante ist die Verwendung von Xylanasen, wodurch selektiv Xylan abgebaut wird und stark mit Cellulose angereichertes Material entsteht. Ein Nachteil eines solchen Niedertemperatur-Verfahrens ist der, im Vergleich zu Zellstoff aus Kraft- oder Soda-Prozessen hohe Ligningehalt in der Cellulose.

Phenol-Formaldehyd basierende Harzsysteme (PF-Harze) sind aufgrund ihrer hohen Festigkeit, Beständigkeit und Härte schon seit vielen Jahren technologisch bedeutsam. Hauptprodukte sind zum einen Formkörper (wie z. B. Billardkugeln) zum anderen aber auch Verbundwerkstoffe wie Spanplatten. Hierbei agiert das PF-Harz als Bindemittel zwischen verschiedenen Holzschichten. Aufgrund der Verknappung fossiler Rohstoffe und steigenden Rohölpreisen sind die Herstellungskosten für das petrochemisch gewonnene Phenol in den letzten Jahren stark gestiegen. Durch die hohe Toxizität der Teilkomponenten Formaldehyd und Phenol, die in Form von nicht-polymerimerisierten Monomeren in allen PF-Materialien vorliegen, ist zudem aus gesundheitlichem und ökologischem Aspekt ein steigendes Interesse an neuartigen Materialien zu sehen. Diese Materialien sollen die Gleichen oder ähnliche Eigenschaften aufweisen wie die klassischen PF-Duroplasten, jedoch weniger giftige Monomere beinhalten.

Lignin ist von der chemischen Struktur ein natürliches Analogon der PF-Harze. Auch hier sind über Alkyl-Gruppen verknüpfte Aromaten in Kombination mit alkylischen und aromatischen Hydroxylgruppen zu finden. Zusätzlich besitzt das Lignin eine hohe Thermostabiltät und agiert als Radikalfänger, wodurch der Einbau in witterungsbeständigen Materialien von großem Vorteil sein kann. Aufgrund der hohen Ähnlichkeit der Materialien und dem geringen Preis wird schon seit 1930 versucht Anteile an Phenol durch Lignin zu ersetzen. Das Ersetzen von Phenol in PF-Harzen durch Lignin, im speziellen durch Kraft-Lignin, ist einer der am meisten untersuchten Bereiche in der Ligninforschung. Dennoch erweisen sich Kraft oder Sulfit-Lignine durch die, während der Prozessierung auftretenden, unangenehmen Gerüche als wenig geeignet für die Spanplattenproduktion. Zudem ist der Ersatz von Phenol durch Lignin bisher nur in bis zu 40-Gew-% möglich, ohne zu stark nachteilige Eigenschaften im Material hervorzurufen. Ein Problem ist, dass die Reaktivität aller bisher vorhandenen Lignine mit Formaldehyd deutlich geringer ist, als die von Phenol (A. Pizzi, J. Adhesion Sci. Technol. 2006, 20, 8, 829-846). Hierdurch sind in der Regel sehr hohe Presszeiten für die Erzeugung von Spanplatten notwendig. Daher sind trotz der jahrzehntelangen Forschung nur wenige Verfahren marktreif geworden.

Ausgehend von Arbeiten um Calve (L. R. Calvé, CA2042476) werden in Nordamerika ligninbasierte Bindematerialien hergestellt, die aus einem binären System von hoch- sowie niedermolekularem Phenol-Formaldehyd-Harz sowie Holz-Lignin als Additiv bestehen. Durch Verwendung des binären Systems konnte ein schnellhärtendes und resistentes Material hergestellt werden, wobei das Gewichtsverhältnis von binärem PF zu Lignin vorzugsweise 80:20 beträgt (dry weight basis).

Die Asian Lignin Manufacturing Pvt. Ltd. verwendet nach eigenen Angaben Strohlignin, das eine Phenolsubstitution von 20-30% ermöglicht.

Viele weitere Verfahren wurden in den letzten 30 Jahren patentiert beziehungsweise publiziert, fanden jedoch keine industrielle Verwendung. So beanspruchten Cook et al. (US5010156) ligninmodifizierte Phenol-Formaldehydharze in denen das Verhältnis von Phenol zu Lignin aus einem Organosolv-Aufschluss von Hartholz zwischen 0,25:1 und 3:1 (bezogen auf die Gewichtsanteile) und das Verhältnis von Formaldehyd:Phenol zwischen 0,25:1 und 0,5:1 liegt. Mit Bagasse Lignin gelang Khan et al. (Khan, M. A. et al., Development and characterization of a wood adhesive using bagasse lignin, Int. J. Adhesion & Adhesives 2004, Vol. 24, 485-493) eine Substitution von bis zu 50% des Phenols, wobei eine ähnliche thermische Stabilität wie bei PF-Harzen erreicht wurde. Andere Gruppen beschrieben in der Regel die Erzeugung von akzeptablen Lignophenolharzen mit einem Ligninanteil von 20-30 Gew-%.

Ein Holzleim mit guten Adhäsionseigenschaften wird in US4769434 beansprucht. Dabei wird ein Bagasse-Lignin mit 6 Gew.-% Formaldehyd für 40 Minuten bei 50°C reagieren gelassen und anschließen mit 9,4 Gew.-% Phenol und 6 Gew.-% eines Füllstoffs versetzt. Das erhaltene Material wies akzeptable Adhäsionskräfte auf, jedoch war der Anteil des Holzbruchs in Zugversuchen eher gering. Das Material wurde des Weiteren in verschiedenen "Blends" mit klassischen PF-Harzen getestet.

Um die Reaktivität des eingesetzten Lignins zu verbessern, werden oftmals chemische Modifizierungen durchgeführt, um das Lösungsverhalten des Lignins zu erhöhen. Insbesondere werden Präpolymere mit Formaldehyd, Epoxiden, Isocyanaten oder durch Einführung zusätzlicher hydroxyaromatischer Gruppen hergestellt. So wurde Lignin in Vorreaktionen mit Formaldehyd methyloliert (z. B. L. R. Calvé, CA2042476; D. Gardner, T. Sellers, Jr., Forest Products J. 1986, 36,61-67) und anschließend einem PF-Harz-Präpolymer beigemischt. Ein anderes Beispiel ist in EP0540836 beschrieben. Hier werden aus dem Organosolv-Verfahren erhaltene Ligninfraktionen mit niedrigem mittleren Molekulargewicht mit Phenol in einem Gewichtsverhältnis zwischen 1:20 bis 3:1 bei hohen Temperaturen von (100-180°C) unter sauren Bedingungen vorreagiert und anschließend mit Formaldehyd zu einem Lignin-Phenol-Novolak kondensiert. Zur weiteren Verarbeitung werden 4-14% eines Härters hinzugefügt (Hexamethylentetramin, Epoxidharze, Phenolresole, Aminoharze). Durch diese Vorreaktionen konnten die Presszeiten deutlich verkürzt werden.

Einen vollständigen Ersatz von Phenol durch Lignin ist bisher in der Literatur nicht beschrieben. Da jedoch Phenol sowohl stark toxisch als auch nicht umweltschonend herstellbar ist, gibt es viele Bestrebungen dies durch natürliche Aromaten zu ersetzen. In erster Linie ist hier der Fufurylalkohol zu nennen, der aus Zuckern gewonnen werden kann. Ein Beispiel hierfür ist in US5288774 beschrieben, wobei ein Ligningehalt im Material von bis zu 50 % erreicht werden konnte. Jedoch mussten auch im aufgeführten Beispiel 14 Gew.-% eines Harnstoffharzes hinzugefügt werden.

In US20020173564 ist Holzklebstoff, ausgehend von Fufurylalkohol und Maleinsäureanhydrid, geoffenbart, der in Gegenwart von bis zu 30 % Lignin mit einem Katalysatorgemisch aus Zinkchlorid und Eisen(III)chlorid umgesetzt wird. Als Füllmaterial wird zudem Nussschalenmehl zugesetzt. Die Charakterisierung des Materials wurde ausschließlich über die Adhäsionskräfte von daraus verleimten Holzplatten gemessen.

Solche Systeme weisen aber Nachteile auf, wie:
- Das aus den Holzablaugen gewonnene Ligninderivat weist eine beschränkte, chemische Reaktivität auf, wourch keine vollständige Substitution der Phenole erlaubt wird. In diesem Zusammenhang ist eine chemische Aktivierung des entsprechenden Ligninderivates durch den Zusatz entsprechender Vernetzer erforderlich.
- Beschleuniger müssen zugesetzt werden, um den Anforderungen kommerzieller PF Harze entsprechen zu können.
- Reaktive Aldehyde, wie Formaldehyd, das genauso wie Phenol als toxisch einzustufen ist, müssen in großen Mengen eingesetzt werden.

So sind z.B. aus DE 40 307 18 und WO 01/03332 Verfahren zur Herstellung von Phenolharzen unter Verwendung von Lignin beschrieben, wobei große Mengen an Aldehyden zugegeben werden müssen. Weitere Dokumente, die aus verschiedensten Lignintypen unter anderem mit Formaldehyd und gegebenenfalls Phenol Harze herstellen, sind DE 10 00 150 B, US 4 769 434, EP 0 540 837, US 2002/065400, US 3 886 101, US 2 201 797 und US 3 697, 498.

Es wurde nun überraschend ein Verfahren gefunden, bei dem giftige Phenol- und Formaldhehydkomponenten zur Herstellung von PF-Harzen in hohem Masse substituiert werden können, sodass nur mehr eine geringe Menge solcher toxischen Verbindungen eingesetzt werden muss. Der Einsatz von Phenol kann dabei überhaupt vermieden werden.

In einem Aspekt stellt die vorliegende Erfindung ein Verfahren zur Herstellung von Phenol-Formaldehyd-Harz-analogen Polymeren (PF-Harz-Analoga), zur Verfügung, wobei eine phenolische Komponente mit Formaldehyd umgesetzt wird, das dadurch gekennzeichnet ist, dass die phenolische Komponente des Harzes zu 60 % bis 100%, z. B. 60%, vorzugsweise 80%, noch mehr bevorzugt 100 % durch ein Lignin ersetzt wird und dass die Menge an Formaldehyd mehr als 0%-Gew-%, aber maximal 5 Gew-% bezogen auf die gesamte Masse an aromatischem Ausgangsmaterialien beträgt.

In einem Verfahren der vorliegenden Erfindung beträgt in einem weiteren Aspekt die Menge an Formaldehyd maximal 5 Gew-%, vorzugsweise unter 1 Gew-%, insbesondere bevorzugt unter 0,5 Gew-% am meisten bevorzugt unter 0,05 Gew-% bezogen auf die gesamte Masse an aromatischen Ausgangsmaterialien, z.B. mehr als 0%, wie 0,01 Gew-%, 0,02 Gew-%, 0,03 Gew-%, 0,04 Gew-%, 0,05 Gew-% bis 5 Gew-%, z.B. mehr als 0% bis 0,5 Gew-%, beispielsweise mehr als 0% bis 0,05 Gew-%.

Die eingesetzte Menge an Formaldehyd muss jedenfalls mehr als 0% betragen, kann aber gegebenenfalls weniger als 0,05% betragen. Ein Fachmann kann die notwendige Menge leicht durch einfache Versuche feststellen.

Das eingesetzte Lignin bedarf dabei keiner zusätzlichen chemischen Aktivierung und das entstandene PF-Harz-Analoge weist überraschenderweise vergleichbare AdhäsionsEigenschaften, wie ein klassisches PF-Harz auf.

In einer Ausführungsform des erfindungsgemäßen Verfahren erfolgt die Umsetzung des Lignin mit oder ohne Phenol mit Formaldehyd bei einer Temperatur von 50°C bis 95°C, insbesondere von 65°C bis 90°.

In einer Ausführungsform umfasst das erfindungsgemäße Verfahren, dass das entstandene Material zum vollständigen Aushärten, gegebenenfalls im Verbundmaterial auf Temperaturen von 100°C oder mehr erhitzt wird.

Die additive Gesamtmenge von Lignin und Phenol wird hierin als "(Gesamtmasse) aromatische(r) Verbindungen" bezeichnet.

In einem Verfahren gemäß vorliegender Erfindung wird, entweder ausgehend von Reinsubstanzen oder ausgehend von lignocellulosischen Aufschlusslösungen, eine basische (alkalische), wässrige Lösung mit 5 bis 80 Gew-%, z.B. 10 bis 60 Gew-%, vorzugsweise 35-55 Gew-% der aromatischen Verbindungen hergestellt.

In einem Verfahren gemäß vorliegender Erfindung können weitere Substanzen, beispielsweise Substanzen, welche dem Fachmann bekannt sind, wie zum Beispiel Füllstoffe (zum Beispiel Holzmehl), Härter oder Weichmacher zugegeben werden.

Die zum Aushärten verwendete Temperatur in einem Verfahren gemäß vorliegender Erfindung beträgt mindestens 100°C, z.B. 100°C bis 200°C, wie 100°C bis 150°C, z.B. 110°C bis 130 °C.

In einer Ausführungsform eines Verfahrens gemäß vorliegender Erfindung wird das eingesetzte Lignin durch einen Niedertemperatur Lignocelluloseaufschluss gewonnen, der dadurch gekennzeichnet ist, dass
A) lignocellulosisches Material mit einer wässrigen Lösung, welche einen Alkohol, z.B. einen C₁₋₆-Alkohol enthält und einen pH-Wert von 10 bis 14 aufweist, bei einer Temperatur von 50 bis 100°C, z.B. 100 °C und darunter, vorzugsweise 85 °C und darunter, besonders bevorzugt 70°C und darunter, behandelt wird, worauf die wässrige Lösung, in der Lignin, das aus der Lignocellulose abgespalten wurde, gelöst vorliegt, vom Feststoff, der ein mit Cellulose und Hemicellulose angereichertes Material darstellt, abgetrennt wird,
B) das in A) erhaltene Lignin entweder vollständig oder fraktioniert nach Entfernung von Alkohol aus der Aufschlusslösung ausgefällt als getrockneter Feststoff, oder nach Entfernung des Alkohols direkt in der Aufschlusslösung gelöst, gegebenenfalls nach Entfernung von Wasser, zur Harzbildung eingesetzt wird.

In einem Verfahren gemäß vorliegender Erfindung nach Maßnahme A) wird der pH Wert mit einer Base, bevorzugt einer anorganischen Base, beispielsweise einem Hydroxid, wie Natronlauge, Kalilauge eingestellt. Die Basenkonzentration beträgt bei der Reaktion typischerweise von 1 bis 10 mol L⁻¹, vorzugsweise von 2 bis 6 mol L⁻¹, noch mehr bevorzugt von 4,5 bis 5,5 mol L⁻¹.

In einem Verfahren gemäß vorliegender Erfindung wird nach Maßnahme A) als lignocellulosisches Material Lignin enthaltendes, organisches Material eingesetzt, z.B. Einjahrespflanzen, wie (trockene) Gräser, oder Teile von Gräsern, vorzugsweise Gräser, Stroh, Energiegräser, wie z. B. Switchgrass, Elefantengras oder Abaca, Sisal, Bagasse, oder untypische Lignocellulosesubstrate, wie Spelzen, z.B. Deckspelzen, wie Reisspelzen, besonders bevorzugt Stroh, Energiegräser Bagasse oder Spelzen, noch mehr bevorzugt Stroh oder Bagasse, z. B. Stroh, wie Weizenstroh. Bevorzugt beträgt dabei der Feststoffgehalt bei Beginn des Delignifizierungprozess gemäß Maßnahme A) bevorzugt 3-30 Gew-% des lignocellulosischen Materials in der wässrigen Lösung und der Feststoff liegt vorzugsweise in einer Stoffdichte von 3-30 Gew-%, insbesondere 5-20 Gew-% vor.

In einem Verfahrens gemäß vorliegender Erfindung wird in A) als Alkohol bevorzugt ein aliphatischer Alkohol, wie ein C₁₋₆-Alkohol, besonders bevorzugt ein C₁₋₄-Alkohol, wie Ethanol oder Isopropanol eingesetzt.

Dabei beruht die Ausführungsform nach den Maßnahmen A) und B) in einem Verfahren nach vorliegenden Erfindung auf der Erkenntnis, dass aus einem mit einer wässrigen basischen Lösung, welche einen Alkohol, insbesondere einen C₁₋₆-Alkohol und einen pH-Wert von 10,0 bis 14,0 aufweist, behandeltes lignocellulosisches Material weniger stark kondensiertes Lignin gewonnen werden kann.

Gemäß Maßnahmen B) in einem Verfahren der vorliegenden Erfindung kann einer alkalischen, alkoholischen Lösung von Lignin Säure zugesetzt und das ausgefällte Lignin abgetrennt werden, und gegebenenfalls aus dem Filtrat zur Gewinnung von weiterem Lignin Alkohol entfernt werden. Durch die Säurezugabe wird der pH-Wert der alkoholischen, alkalischen, ligninhaltigen Lösung, z. B. der Aufschlusslösung, auf einen pH-Wert von pH 7 bis pH 1, bevorzugt von pH 7 bis pH 2, besonders bevorzugt auf pH 2,5 bis pH 1,5 abgesenkt. In einem Verfahrens gemäß vorliegender Erfindung kann nach Maßnahme B) der pH-Wert der alkoholischen, alkalischen Lösung durch Zugabe von Säure stufenweise zwischen pH 7 und pH 1 abgesenkt werden, wobei nach jeder Stufe der pH Absenkung das ausgefallene Lignin abgetrennt wird, insbesondere abgetrennt durch Zentrifugation oder Filtration, insbesondere wobei die erhaltenen Ligninfraktionen getrocknet werden und der, eventuell noch in der/den gewonnenen Ligninfraktionen befindliche Alkohol durch Trocknen zurückgewonnen wird.

Es hat sich gezeigt, dass sich bei einer Ausführungsform des Verfahrens gemäß vorliegender Erfindung nach Maßnahme B) Ligninfraktionen mit höherem Molekulargewicht durch den Säurezusatz ausgefällt werden, während Ligninfraktionen mit niedrigerem Molekulargewicht in Lösung bleiben. Nach dem Entfernen der ausgefällten Ligninfraktion, z. B. durch Abfiltrieren, können durch Entfernen von Alkohol aus der zurückbleibenden Lösung, z.B. dem zurückbleibenden Filtrat, weitere Ligninfraktionen ausgefällt werden, wobei die Molekulargewichte der ausgefällten Ligninfraktionen umso kleiner werden, je mehr Alkohol aus der Lösung entfernt wurde. In einer Ausführungsform der vorliegende Erfindung gemäß Maßnahme B) wird somit ein Verfahren zur fraktionierten Gewinnung von höher- und niedermolekularem Lignin zu Verfügung gestellt, das dadurch gekennzeichnet ist, dass einer alkalischen, alkoholischen Lösung von Lignin Säure zugesetzt, die ausgefällte höhermolekulare Ligninfraktion abgetrennt und aus der, nach dem Abtrennen erhaltenen Lösung Alkohol zur Ausfällung von niedermolekularen Ligninfraktionen entfernt wird, bevorzugt durch Verdampfung, Vakuumverdampfung, Destillation.

In einem Verfahren gemäß vorliegender Erfindung nach Maßnahme B) kann die niedermolekulare Ligninfraktion ein Mn (Number average molecular weight) 650 D, bevorzugt 750 D bis 1000 D und ein Mw (Weight average molecular weight) von 1000 D bis 1500 D, bevorzugt 1250 D aufweisen; und die hochmolekulare Ligninfraktion kann ein Mn von 1000 D bis1500 D, bevorzugt 1100 D bis 1200 D und ein Mw zwischen 3000 D und 7000 D, bevorzugt 4500 D bis 5000 D aufweisen.

In einem Verfahren gemäß vorliegender Erfindung kann somit Lignin mit einem Mn (Number average molecular weight) von 650 D bis 5000 D verwendet werden.

Der Ligninaufschluss gemäß Maßnahme A) in einem Verfahren gemäß vorliegender Erfindung wird bei einer Temperatur von 100°C und darunter, bevorzugt von 40°C bis 90°C, besonders bevorzugt von 50°C bis 70°C durchgeführt. Es hat sich herausgestellt, dass bei Verwendung von Temperaturen von mehr als 100°C verstärkt Kondensationsprodukte des Lignins auftreten, z.B. kondensierte, phenolische Fragmente der Formeln die durch Ringkondensation-Reaktionen entstehen. Es wurde mittels 2D NMR Untersuchung gefunden, dass der Gehalt von solchen Fragmenten in gemäß der vorliegenden Erfindung isoliertem Lignin überaschendweise wesentlich niedriger ist als bei Vergleichs-Ligninen, die durch eine Hochtemperaturextraktion hergestellt wurden, wie unten in Tabelle 1 gezeigt:

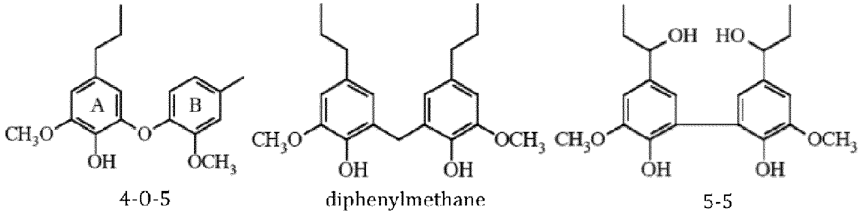

**Tabelle 1**

| **Lignin** | **Kondensierte phenolische Fragmente in Lignin, mmol/g** | | | |
|---|---|---|---|---|
| | **Diphenylmethan** | **4-0-5** | **5-5** | **Total** |
| Lignin erhalten nach dem Verfahren gemäß vorliegender Erfindung | 0,02 | 0,06 | 0,10 | 0,18 |
| Soda-Lignin aus Weizenstroh | 0,04 | 0,09 | 0,12 | 0,25 |
| Soda-Lignin aus Sarkanda Grass | 0,36 | 0,21 | 0,28 | 0,84 |
| Soda-Lignin aus Agrarfaser | 0,40 | 0,25 | 0,31 | 0,96 |
| Organosolv-Lignin aus Laubholz | 0,45 | 0,25 | 0,27 | 0,97 |

Darüber hinaus müssen im Aufschlussprozess gemäß Maßnahme A), wie oben ausgeführt, keine schwefelhaltigen Reagenzien eingesetzt werden, sodass das gemäß dieser Ausführungsform des Verfahrens nach vorliegender Erfindung isolierte Lignin frei von Schwefel aus schwefelhaltigen Reagenzien ist.

Zur Erreichung einer angestrebten Adhäsionskraft, die mit Hilfe der Zugfestigkeit gemessen werden kann, können die jeweiligen prozentuellen Zusammensetzungen aller Komponenten sowie die Reaktionsparameter Temperatur, Reaktionsdauer und Feststoffkonzentration in einem Verfahren nach Maßnahmen A) und B) entsprechend eingestellt werden.

PF-analoge Harze, die gemäß vorliegender Erfindung hergestellt wurden, z.B. mit der durch das Verfahren gemäß vorliegender Erfindung erreichten Adhäsionskraft bzw. Zugfestigkeit, sind neu und ebenfalls Gegenstand der vorliegenden Erfindung.

In einen anderen Aspekt stellt die vorliegende Erfindung PF-analoge Harze zur Verfügung, die nach einem Verfahren der vorliegenden Erfindung herstellbar, und in einem weiteren Aspekt Materialien, z.B. Formmassen die aus einem PF-analogen Präpolymer, insbesondere hergestellt nach einem Verfahren der vorliegenden Erfindung, herstellbar sind.

Die vorliegende Anmeldung offenbart auch ein Verfahren zur Herstellung von PF-Harz-analogen Polymeren, wobei
a) entweder Lignin ohne Phenol, oder mit Phenol in einer Menge von maximal 40 Gew.-%, bevorzugt 20 Gew.-%, unter basischen Bedingungen mit H₂O in Kontakt gebracht wird, oder eine wässrige, Lignin enthaltende basische Aufschlusslösung gegebenenfalls mit Phenol versetzt wird, derart, dass, falls Phenol verwendet wird, Phenol in einer Menge von maximal 40 Gew.-%, bevorzugt 20 Gew.-%, vorliegt, wobei gegebenenfalls Wasser aus der Lösung entfernt wird,
b) eine Mischung aus a) mit Formaldehyd in einer Menge von maximal 5 Gew-%, vorzugsweise unter 1 Gew-%, bevorzugt unter 0,5 Gew-%, noch mehr bevorzugt unter 0,05 Gew-% bezogen auf die Gesamtmasse an aromatischen Ausgangsmaterialien, z.B. mehr als 0% %, wie 0,01 Gew-%, 0,02 Gew-%, 0,03 Gew-%, 0,04 Gew-%, 0,05 Gew-% bis 5 Gew- %, wie z.B. mehr als 0% bis 0,5 Gew-%, beispielsweise mehr als 0% bis 0,05 Gew-% bei erhöhter Temperatur zur Reaktion gebracht wird, und, gegebenenfalls,
c) das entstandene Material zum vollständigen Aushärten, gegebenenfalls im Verbundmaterial auf Temperaturen von 100°C oder mehr erhitzt wird.

Das Harz wird dabei gemäß der Stufen a) und b) hergestellt. Das Harz wird dabei in Form einer zähflüssigen Masse erhalten die als solche bis zur Anwendung gelagert werden kann.

In Stufe c) wird das erfindungsgemäße Harz zur Verbindung von Verbundmaterial ausgehärtet.

Eine erhöhte Temperatur in Stufe b) schließt dabei eine Temperatur ein, die höher ist als Raumtemperatur, aber geringer als 100°C, z. B. 40 bis 95°C, wie 65 bis 90°C.

In einem weiteren Aspekt wird ein Verfahren zur Herstellung von Phenol-Formaldehyd-Harz-analogen Polymeren offenbart, wobei eine phenolische Komponente mit Formaldehyd umgesetzt wird, das dadurch gekennzeichnet ist, dass die phenolische Komponente des Harzes zu 60% bis 100%, insbesondere zu 80 % bis 100% durch ein Lignin ersetzt wird.

Mit den nachfolgenden Beispielen wird der Einfluss von Lignin- und Formaldehydgehalt der Einfluss der Ligninquelle, sowie der Reaktionsdauer auf die Qualität des erzeugten Materials aufgezeigt.

In den nachfolgenden Beispielen sind die Temperaturen in Grad Celsius (°C) angegeben. Die folgenden Abkürzungen werden verwendet:
- EtOH: Ethanol

- min: Minuten
- PF-Harze: Phenol-Formaldehyd basierende Harzsysteme
- rt: Raumtemperatur

### Beispiel 1

### a) Aufschluss

100 g Weizenstroh (21,0 Gew.-% Ligningehalt, 20,9 Gew.-% Xylangehalt, 36,8 Gew.-% Cellulosegehalt bezogen auf die Trockenmasse) wurde auf eine Partikelgröße von 2 cm zerkleinert. Das zerkleinerte Stroh wurde in einer Mischung aus H₂O, EtOH (Alkoholgehalt 40 Vol-%) und NaOH (8 Gew-% bezogen auf Trockenmasse) suspendiert, sodass ein Feststoffgehalt von 10 Gew-% erreicht wurde. Die erhaltene Mischung wurde bei konstanter Temperatur von 70°C für 18 Stunden mechanisch gerührt. Anschließend wurde der erhaltene Feststoff abgepresst und mit ausreichender Menge H₂O gewaschen, wobei ein mit Cellulose und Hemicellulose angereichertes Material und eine mit Lignin angereicherte Lösung erhalten wurde.
Feststoffausbeute: 60,1 ± 3,1 Gew-%
Delignifizierung: 78 ± 6 %
Ligningehalt des Feststoffs: 7,9 ±1,1 Gew-%
Extrahiertes Lignin pro 100 g Weizenstroh: 16,4 ± 1,3 g
Extrahierter Zucker pro 100 g Weizenstroh: 6,0 ± 1,0 g

### b) Lignin-Fällung

Das abgepresste Filtrat aus a) wurde mit dem Waschwasser vereinigt und unter reduziertem Druck bei 50°C vom EtOH befreit. Präzipitation des Lignins wurde durch langsame Zugabe von H₂SO₄ bis zu einem pH-Wert von 2 eingeleitet. Die erhaltene Suspension wurde für 5 Stunden bei rt unter langsamen Rühren reifen gelassen, woraufhin das gefällte Lignin in einer Zentrifuge abgetrennt und anschließend im Exsikkator getrocknet wurde. Es wurden dabei 18,1 ± 2,1 g Lignin mit einen Wassergehalt von 10 ± 3 Gew-% erhalten.

### c) Bildung von PF-Analoga

136 mg des nach b) erhaltenen Lignins wurden mit 60 mg Phenol versetzt und in 164 µL H₂O und 60 µL wässriger NaOH (50 Gew.-%) gelöst. Zu dieser Lösung wurden 2.8 µL Formalin (37 % in H₂O) hinzugegeben, woraufhin das Stoffgemisch für 120 min auf 80 °C erhitzt auf Raumtemperatur abgekühlt und mit 63 µL H₂O versetzt wurde. Dabei wurde eine zähflüssige braune Masse erhalten, die auf eine kleine, runde Holzplatte (Ø = 25 mm) mit einem Spatel gleichmäßig verstrichen wurde. Auf diese Holzplatte wurde anschließend eine zweite Platte der gleichen Art aufgelegt, woraufhin beide in einem Schraubstock zusammengepresst und bei 120 °C für eine Stunde ausgehärtet wurden. Die beiden Holzplatten klebten aneinander und sind durch manuelle Kräfte nicht zu trennen.

### Beispiel 2

180 mg eines nach Beispiel 1 b) erhaltenen Lignins wurden mit 45 mg Phenol versetzt und in 164 µL H₂O und 60 µL wässriger NaOH (50 Gew.-%) gelöst. Zu dieser Lösung wurden 2.8 µL Formalin (3,7 % in H₂O) hinzugegeben, woraufhin das Stoffgemisch für 120 min auf 80°C erhitzt, auf Raumtemperatur abgekühlt und mit 68 µL H₂O versetzt wurde. Dabei wurde eine zähflüssige, braune Masse erhalten, die auf eine kleine, runde Holzplatte (Ø = 25 mm) mit einem Spatel gleichmäßig verstrichen wurde. Auf diese Holzplatte wurde anschließend eine zweite Platte der gleichen Art aufgelegt, woraufhin beide in einem Schraubstock zusammengepresst und bei 120 °C für eine Stunde ausgehärtet wurden. Die beiden Holzplatten klebten aneinander und sind durch manuelle Kräfte nicht zu trennen.

### Beispiel 3

180 mg eines nach Beispiel 1 b) erhaltenen Lignins wurden mit 45 mg Phenol versetzt und in 164 µL H₂O und 60 µL wässriger NaOH (50 Gew-%) gelöst. Zu dieser Lösung wurden 2,8 µL Formalin (0,37% in H₂O) hinzugegeben, woraufhin das Stoffgemisch für 120 min auf 80 °C erhitzt auf Raumtemperatur abgekühlt und mit 68 µL H₂O versetzt wurde Dabei wurde eine zähflüssige braune Masse erhalten, die auf eine kleine, runde Holzplatte (Ø = 25 mm) mit einem Spatel gleichmäßig verstrichen wurde. Auf diese Holzplatte wurde anschließend eine zweite Platte der gleichen Art aufgelegt, woraufhin beide in einem Schraubstock zusammengepresst und bei 120 °C für eine Stunde ausgehärtet wurden. Die beiden Holzplatten klebten aneinander und sind durch manuelle Kräfte nicht zu trennen.

### Beispiel 4

202 mg eines nach Beispiel 1 b) erhaltenen Lignins wurden mit 23 mg Phenol versetzt und in 164 µL H₂O sowie 60 µL wässriger NaOH (50 Gew-%) gelöst. Zu dieser Lösung wurden 2,8 µL Formalin (0,37 % in H₂O) hinzugegeben, das erhaltene Stoffgemisch wurde für 120 min auf 80°C erhitzt, auf rt abgekühlt und mit 68 µL H₂O versetzt. Dabei wurde eine zähflüssige braune Masse erhalten, die auf eine kleine, runde Holzplatte (Ø = 25 mm) mit einem Spatel gleichmäßig verstrichen wurde. Auf diese Holzplatte wurde anschließend eine zweite Platte der gleichen Art aufgelegt, woraufhin beide in einem Schraubstock zusammengepresst und bei 120 °C für eine Stunde ausgehärtet wurden. Die beiden Holzplatten klebten aneinander und sind durch manuelle Kräfte nicht zu trennen.

### Beispiel 5

225 mg eines nach Beispiel 1 b) erhaltenen Lignins wurden in 164 µL H₂O und 60 µL wässriger NaOH (50 Gew.-%) gelöst. Zu dieser Lösung wurden 2.8 µL Formalin (0,37 % in H₂O) hinzugegeben, woraufhin das Stoffgemisch für 120 min auf 80 °C erhitzt auf Raumtemperatur abgekühlt und mit 68 µL H₂O versetzt wurde. Dabei wurde eine zähflüssige braune Masse erhalten, die auf eine kleine, runde Holzplatte (Ø = 25 mm) mit einem Spatel gleichmäßig verstrichen wurde. Auf diese Holzplatte wurde anschließend eine zweite Platte der gleichen Art aufgelegt, woraufhin beide in einem Schraubstock zusammengepresst und bei 120 °C für eine Stunde ausgehärtet wurden. Die beiden Holzplatten klebten aneinander und sind durch manuelle Kräfte nicht zu trennen.

### Beispiel 6

225 mg kommerziell erhältliches Green Value Lignin wurden in 164 µL H₂O sowie 60 µL wässriger NaOH (50 Gew-%) gelöst. Zu dieser Lösung wurden 2.8 µL Formalin (0,37 % in H₂O) hinzugegeben, woraufhin das Stoffgemisch für 120 min auf 80°C erhitzt, auf Raumtemperatur abgekühlt und mit 68 µL H₂O versetzt wurde. Dabei wurde eine zähflüssige braune Masse erhalten, die auf eine kleine, runde Holzplatte (Ø = 25 mm) mit einem Spatel gleichmäßig verstrichen wurde. Auf diese Holzplatte wurde anschließend eine zweite Platte der gleichen Art aufgelegt, woraufhin beide in einem Schraubstock zusammengepresst und bei 120 °C für eine Stunde ausgehärtet wurden. Die beiden Holzplatten klebten aneinander und sind durch manuelle Kräfte nicht zu trennen.

### Beispiel 7

225 mg kommerziell erhältliches Protobind™ 1000 Lignin wurden in 164 µL H₂O und 60 µL wässriger NaOH (50 Gew-%) gelöst. Zu dieser Lösung wurden 2,8 µL Formalin (0,37 % in H₂O) hinzugegeben, woraufhin das erhaltene Stoffgemisch für 120 min auf 80°C erhitzt, auf rt abgekühlt und mit 68 µL H₂O versetzt wurde. Dabei wurde eine zähflüssige braune Masse erhalten, die auf eine kleine, runde Holzplatte (Ø = 25 mm) mit einem Spatel gleichmäßig verstrichen wurde. Auf diese Holzplatte wurde anschließend eine zweite Platte der gleichen Art aufgelegt, woraufhin beide in einem Schraubstock zusammengepresst und bei 120 °C für eine Stunde ausgehärtet wurden. Die beiden Holzplatten klebten aneinander und sind durch manuelle Kräfte nicht zu trennen.

## Patentansprüche

1. Verfahren zur Herstellung von Phenol-Formaldehyd-Harz-analogen Polymeren, wobei eine phenolische Komponente mit Formaldehyd umgesetzt wird, **dadurch gekennzeichnet, dass** die phenolische Komponente des Harzes zu 60% bis 100%, insbesondere zu 80 % bis 100% durch Lignin ersetzt wird und dass die Menge an Formaldehyd mehr als 0%-Gew-%, aber maximal 5 Gew-% bezogen auf die gesamte Masse an aromatischem Ausgangsmaterialien beträgt.

2. Verfahren nach Anspruch 1, **dadurch gekennzeichnet, dass** die phenolische Komponente des Harzes zu 100% durch ein Lignin ersetzt wird.

3. Verfahren nach einem der Ansprüche 1 oder 2, **dadurch gekennzeichnet, dass** die Menge an Formaldehyd mehr als 0 Gew-%, aber maximal 0,5 Gew-%, insbesondere maximal 0,05 Gew-% bezogen auf die gesamte Masse an aromatischem Ausgangsmaterialien beträgt.

4. Verfahren nach einem der Ansprüche 1 bis 3, wobei die Umsetzung des Lignin mit oder ohne Phenol mit Formaldehyd bei einer Temperatur von 50°C bis 95°C, insbesondere von 65°C bis 90°C erfolgt.

5. Verfahren nach Anspruch 4, **dadurch gekennzeichnet, dass** das entstandene Material zum vollständigen Aushärten, gegebenenfalls im Verbundmaterial, auf Temperaturen von 100°C und mehr erhitzt wird.

6. Verfahren nach einem der Ansprüche 1 bis 5, **dadurch gekennzeichnet dass** das eingesetzte Lignin durch einen Niedertemperatur-Lignocelluloseaufschluss gewonnen wird, insbesondere durch einen Niedertemperatur-Lignocelluloseaufschluss, der **dadurch gekennzeichnet ist, dass**
A) lignocellulosisches Material mit einer wässrigen Lösung, welche einen C₁₋₆-Alkohol enthält und einen pH-Wert von 10 bis 14 aufweist, bei einer Temperatur von 50 bis 100°C, z.B. 100°C und darunter, insbesondere 85°C und darunter, insbesondere 70°C und darunter, behandelt wird, worauf die wässrige Lösung, in der Lignin, das aus der Lignocellulose abgespalten wurde, gelöst vorliegt, vom Feststoff, der ein mit Cellulose und Hemicellulose angereichertes Material darstellt, abgetrennt wird,
B) das in A) erhaltene Lignin entweder vollständig oder fraktioniert nach Entfernung von Alkohol aus der Aufschlusslösung ausgefällt als getrockneter Feststoff, oder nach Entfernung des Alkohols direkt in der Aufschlusslösung gelöst, gegebenenfalls nach Entfernung von Wasser, zur Harzbildung eingesetzt wird.

7. Phenol-Formaldehyd-Harz-analoge Polymere, die nach einem Verfahren der Ansprüche 1 bis 6 herstellbar sind.

8. Materialien, herstellbar aus Phenol-Formaldehyd-Harz-analogen Polymeren gemäß Anspruch 7.

## Claims

1. A method for producing polymers analogous to phenol formaldehyde resin, wherein a phenolic component is converted with formaldehyde, **characterized in that** 60% to 100%, in particular 80% to 100%, of the phenolic component of the resin is replaced by lignin, and that the amount of formaldehyde is higher than 0 % by weight, but at the most 5 % by weight, based on the total mass of aromatic starting materials.

2. A method according to claim 1, **characterized in that** 100% of the phenolic component of the resin is replaced by a lignin.

3. A method according to any of the claims 1 or 2, **characterized in that** the amount of formaldehyde is higher than 0 % by weight, but at the most 0.5 % by weight, in particular at the most 0.05 % by weight, based on the total mass of aromatic starting materials.

4. A method according to any of claims 1 to 3, wherein the conversion of the lignin with or without phenol with formaldehyde is carried out at a temperature of 50°C to 95°C, in particular 65°C to 90°C.

5. A method according to claim 4, **characterized in that** the resulting material is heated for complete curing, optionally in the composite material, to temperatures of 100°C and higher.

6. A method according to any of claims 1 to 5, **characterized in that** the lignin used is obtained by means of low-temperature lignocellulose pulping, in particular by low-temperature lignocellulose pulping, which is **characterized in that**
A) lignocellulose material is treated with an aqueous solution containing a C₁₋₆ alcohol and having a pH value of 10 to 14 at a temperature of 50°C to 100°C, for example 100°C and lower, in particular 85°C and lower, in particular 70°C and lower, whereupon the aqueous solution, in which the lignin that has been separated from the lignocellulose is present in a dissolved form, is separated from the solid presenting a material enriched with cellulose and hemicellulose,
B) the lignin obtained in A) is used for the production of resin, either completely or in fractions following the removal of alcohol from the pulping solution, precipitated as a dried solid, or following the removal of the alcohol dissolved directly in the pulping solution, optionally following the removal of water.

7. Polymers analogous to phenol formaldehyde resin producible according to a method of the claims 1 to 6.

8. Materials producible from polymers analogous to phenol formaldehyde resin according to claim 7.

## Revendications

1. Procédé de préparation de polymères analogues aux résines phénol-formaldéhyde, un composant phénolique étant mis en réaction avec le formaldéhyde, **caractérisé en ce que** le composant phénolique de la résine est remplacé à raison de 60 % à 100 %, en particulier à raison de 80 % à 100 % par une lignine et la quantité de formaldéhyde atteint plus de 0 % en poids, mais au maximum plus de 5 % en poids, rapporté à la masse totale des matériaux de départ aromatiques.

2. Procédé selon la revendication 1, **caractérisé en ce que** le composant phénolique de la résine est remplacé à raison de 100 % par une lignine.

3. Procédé selon l'une des revendications 1 ou 2, **caractérisé en ce que** la quantité de formaldéhyde atteint plus de 0 % en poids, mais au maximum 0,5 % en poids, en particulier au maximum 0,05 % en poids rapporté à la masse totale des matériaux de départ aromatiques.

4. Procédé selon l'une des revendications 1 à 3, la mise en réaction de la lignine avec ou sans phénol avec le formaldéhyde étant effectuée à une température de 50°C à 95°C, en particulier de 65°C à 90°C.

5. Procédé selon la revendication 4, **caractérisé en ce que** le matériau obtenu est chauffé à des températures supérieure ou égales à 100°C en vue d'un durcissement complet, le cas échéant dans le matériau composite.

6. Procédé selon l'une des revendications 1 à 5, **caractérisé en ce que** la lignine introduite est produite par une décomposition de lignocellulose à basse température, en particulier par une décomposition de lignocellulose à basse température qui est **caractérisée en ce que**
A) le matériau lignocellulosique est traité avec une solution aqueuse, laquelle contient un alcool en C₁₋₆ et un pH de 10 à 14, à une température de 50 à 100°C, par exemple inférieure ou égale à 100°C, en particulier inférieure ou égale à 85°C, en particulier inférieure ou égale à 70°C, après quoi la solution aqueuse, dans laquelle la lignine, qui a été détachée de la lignocellulose, présente à l'état dissout, est séparée de la matière solide, qui représente un matériau enrichi en cellulose et en hémicellulose,
B) la lignine obtenue en A) est utilisée pour la formation de la résine, soit en étant précipitée entièrement ou de manière fractionnée après élimination de l'alcool de la solution de décomposition, en tant que matière solide séchée, soit en étant dissoute directement dans la solution de décomposition après élimination de l'alcool, le cas échéant après élimination de l'eau.

7. Polymères analogues aux résines phénol-formaldéhyde, susceptible d'être préparés selon un procédé des revendications 1 à 6.

8. Matériau, susceptible d'être préparé à partir de polymères analogues aux résines phénol-formaldéhyde selon la revendication 7.
